# EUROPEAN PATENT APPLICATION

(11) **EP 2 542 012 A1**
(43) Date of publication of application: **02.01.2013**
(21) Application number: 12171904.1
(22) Date of filing: 14.06.2012
(51) Int. Cl.: H04W 76/02

(54) **User session routing between mobile network gateways**

(30) Priority: 29.06.2011 US 201113172579
(71) Applicant: Juniper Networks, Inc., Sunnyvale, CA 94089-1206 (US)
(72) Inventor: Mehta, Apurva, Cupertino, CA California 950140 (US); Brinckman, Bart, Redwood City, CA California 94063 (US); Hong, Bin W., San Jose, CA California 95138 (US); Yang, Huiyang, Cupertino, CA California 95014 (US); Sankaran, Krishna, Milpitas, CA California 95035 (US); Mehta, Kumar, Cupertino, CA California 95014 (US)
(74) Representative: Meldrum, David James

(57) **Abstract**

In general, techniques are described for dynamically redirecting session requests received with a mobile network gateway to another gateway of the mobile network. Heterogeneous static and dynamic capabilities among gateways of the mobile network lead some gateways unable to service a particular session requested by a wireless device attached to the mobile network. A set of policies configured within the gateways by a mobile network operator and applied by the gateway enable the gateway to identify and offload session requests to another gateway of the mobile network that has the present capability to service the session. The policies may define conditions and actions to provide flexible routing of the user session to an appropriate gateway.

## Description

### PRIORITY CLAIM

This application claims the benefit of U.S. Patent Application No. 13/172,579, filed June 29, 2011, the entire content of which is incorporated herein by reference.

### FIELD and BACKGROUND

The invention relates to mobile networks and, more specifically but not exclusively, to session handling within mobile networks.

A cellular radio access network is a collection of cells that each includes at least one base station capable of transmitting and relaying signals to subscribers' wireless devices. A "cell" generally denotes a distinct area of a mobile network that utilizes a particular frequency or range of frequencies for transmission of data. A typical base station is a tower to which are affixed a number of antennas that transmit and receive the data over the particular frequency. Wireless devices, such as cellular or mobile phones, smart phones, camera phones, personal digital assistants (PDAs) and laptop computers, may initiate or otherwise transmit a signal at the designated frequency to the base station to initiate a call or data session and begin transmitting data.

Mobile service provider networks convert cellular signals, e.g., Time Division Multiple Access (TDMA) signals, Orthogonal Frequency-Division Multiplexing (OFDM) signals or Code Division Multiple Access (CDMA) signals, received at a base station from wireless devices into Internet protocol (IP) packets for transmission within packet-based networks. A number of standards have been proposed to facilitate this conversion and transmission of cellular signals to IP packets, such as a general packet radio service (GPRS) standardized by the Global System for Mobile Communications (GSM) Association, a Universal Mobile Telecommunications System (UMTS) architecture, an evolution of UMTS referred to as Long Term Evolution (LTE), mobile IP standardized by the Internet Engineering Task Force (IETF), as well as other standards proposed by the 3^{rd} Generation Partnership Project (3GPP), 3^{rd} Generation Partnership Project 2 (3GGP/2) and the Worldwide Interoperability for Microwave Access (WiMAX) forum.

A typical 3GPP mobile service provider network, or mobile network, includes a core packet-switched network, a transport network, and one or more radio access networks. The core packet-switched network for the mobile network establishes logical connections, known as bearers, among the many service nodes on a path between a wireless device, attached to one of the radio access networks, and a packet data network (PDN). The service nodes then utilize the bearers to transport subscriber traffic exchanged between the wireless device and the PDN, which may include, for example, the Internet, an enterprise intranet, a layer 3 VPN, and a service provider's private network. Various PDNs provide a variety of packet-based data services to wireless devices to enable the wireless devices to exchange service data with application or other servers of the PDNs. A mobile network may select one of a number of gateways that provide access to a particular PDN to service a particular wireless device data session.

### SUMMARY

In general, techniques are described for user session routing between mobile network gateways. The techniques provide operators of mobile networks a degree of flexible, fine-grain control over selection of assignment of user sessions to mobile network gateways. Moreover, selection and assignment of subscriber sessions need not necessarily be solely the task of a centralized control system, such as mobility management equipment (MME), deployed within a mobile service provider network.

As described herein, individual mobile network gateways may dynamically redirect session requests received with a mobile network gateway to another gateway of the mobile network. Session requests can be routed between the mobile network gateways based on the capabilities of each gateway device in view of the specific requirements for the mobile subscriber. Heterogeneous static and dynamic capabilities among gateways of the mobile network leave some gateways unable to service a particular session requested by a wireless device attached to the mobile network. A set of policies configured within each of the gateways by a mobile network operator and applied by the gateway enable the gateway to identify and offload session requests to another gateway of the mobile network that has the present capability to service the session. The policies may define conditions and actions to provide flexible routing of the user session to an appropriate gateway. For example, individual mobile gateways can apply the profiles to determine whether they are configured to support the subscriber-specific charging and accounting requirements for the mobile user, as received from an upstream service gateway (e.g., online charging or offline charging requirements).

In one example, a mobile network operator associates access point names (APNs), by which mobile devices identify and request service provider network services, with a service selection profile that define policies that define matching criteria and actions for session requests that reference the associated APNs. Example criteria include the mobile subscriber identifier (MSI) for the session request, the radio access technology (RAT) type by which the wireless device is communicating with the mobile network, the particular charging service required for the requested session, and the dynamic session load upon the gateway. For session requests that match criteria within a service selection profile associated with a requested APN, a receiving gateway may redirect the session request to a more appropriate gateway, apply lawful intercept (LI) to the user session, or drop/reject the session request altogether.

As a result, the techniques may provide the mobile network operator with granular decision authority, at the sessions anchor point (i.e., the gateways), over routing session requests to various gateways within the mobile network. Because the mobile network operator may not necessarily have control over the routing of session requests that originate outside of its mobile network to gateways, as in the case of roaming devices attached to another mobile network, the techniques may give the operator additional flexibility and control over gateway selection in view of the specific requirements of a requested session.

In one example, a method comprises receiving a session request with a first gateway of a mobile service provider network that provides access to services of a packet data network, and redirecting the session request from the first gateway to a second gateway of the mobile service provider network.

In another example, a gateway comprises a data plane that receives a session request from a mobile service provider network in which the gateway resides, and a control plane that redirects the session request from the gateway to another gateway of the mobile service provider network.

In another example, a computer program product can include instructions to cause one or more programmable processors to receive a session request with a first gateway of a mobile service provider network that provides access to services of a packet data network, and redirect the session request from the first gateway to a second gateway of the mobile service provider network. In some examples the computer program product may carried on a non-transitory computer-readable medium.

The details of one or more embodiments of the present teachings are set forth in the accompanying drawings and the description below. Other features, objects, and advantages of the present teachings will be apparent from the description and drawings, and from the claims which define the invention.

### BRIEF DESCRIPTION OF DRAWINGS

FIG. 1 is a block diagram illustrating an example network system that performs user session routing between mobile network gateways according to the described techniques.

FIG. 2 is a block diagram illustrating an example network system having packet data network (PDN) gateways that redirect session requests in accordance with techniques described in this disclosure.

FIG. 3 is a block diagram illustrating, in further detail, an example instance of a mobile network gateway that performs session request redirection according to techniques described herein.

FIG. 4 is a block diagram illustrating example components of service unit that operate to apply service selection profiles and potentially redirect subscriber sessions to other mobile gateway devices to serve as control plane anchors for the sessions.

### DETAILED DESCRIPTION

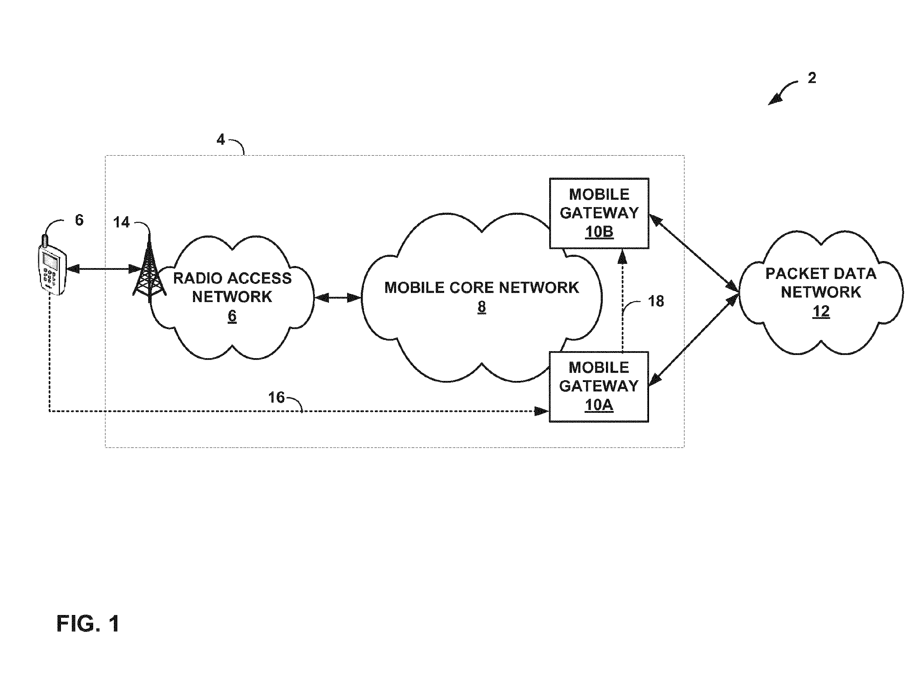

FIG. 1 is a block diagram illustrating an example network system 2 that performs session request redirection according to the described techniques. In this example, network system 2 comprises packet data network (PDN) 12 coupled to mobile service provider network 4. Packet data network 12 supports one or more packet-based services that are available for request and use by wireless device 6. As examples, PDN 12 may provide, for example, bulk data delivery, voice over Internet protocol (VoIP), Internet protocol television (IPTV), Short Messaging Service (SMS), Wireless Application Protocol (WAP) service, or customer-specific application services. Packet data network 12 may comprise, for instance, a local area network (LAN), a wide area network (WAN), the Internet, a virtual LAN (VLAN), an enterprise LAN, a layer 3 virtual private network (VPN), an Internet Protocol (IP) intranet operated by the mobile service provider that operates mobile service provider network 4, an enterprise IP network, or some combination thereof. In various embodiments, PDN 12 is connected to a public WAN, the Internet, or to other networks. Packet data network 12 executes one or more packet data protocols (PDPs), such as IP (IPv4 and/or IPv6), X.25 or Point-to-Point Protocol (PPP), to enable packet transport for available services.

Wireless device 6 is a wireless communication device that may comprise, for example, a utility meter, a security device such as a motion detector or door lock, a light, a mobile telephone, a laptop or desktop computer having, e.g., a 3G wireless card, a wireless-capable netbook, a video game device, a pager, a smart phone, or a personal data assistant (PDA). Wireless device 6 may run one or more applications, such as metering applications, listeners, mobile calls, video games, videoconferencing, and email, among others. Certain applications running on wireless device 6 may require access to services offered by PDN 12. Wireless device 6 may also be referred to, in various architectural embodiments, as User Equipment (UE) or a Mobile Station (MS).

A service provider operates mobile service provider network 4 to provide network access, data transport and other services to wireless device 6. In general, mobile service provider network 4 may implement any commonly defined cellular network architecture including those defined by standards bodies, such as a Global System for Mobile communication (GSM) Association, a 3^{rd} Generation Partnership Project (3GPP), a 3^{rd} Generation Partnership Project 2 (3GGP/2), an Internet Engineering Task Force (IETF) and a Worldwide Interoperability for Microwave Access (WiMAX) forum. For example, mobile service provider network 4 may implement one or more of a GSM architecture, a General Packet Radio Service (GPRS) architecture, a Universal Mobile Telecommunications System (UMTS) architecture, and an evolution of UMTS referred to as Long Term Evolution (LTE), each of which are standardized by 3GGP. Mobile service provider network 4 may, alternatively or in conjunction with one of the above, implement a code division multiple access-2000 ("CDMA2000") architecture or Enhanced Data Rates for GSM Evolution (EDGE) architecture. Mobile service provider network 4 may, again as an alternative or in conjunction with one or more of the above, implement a WiMAX architecture defined by the WiMAX forum.

Mobile service provider network 4 comprises mobile core network 8 and radio access network 6. Wireless device 6 communicates using wireless links to base station 14 of radio access network 6 to access mobile service provider network 4. Mobile service provider network 4 may, in some embodiments, include multiple radio access network coupled to mobile core network 8.

Mobile core network 8 and radio access network 6 may communicate over a backhaul network (not shown) that includes land-based transmission lines, frequently leased by a service provider for mobile service provider network, to transport mobile data and control traffic between base station 4 and mobile gateways 10A-10B ("mobile gateways 10"). The backhaul network also includes network devices such as aggregation devices and routers.

Mobile core network 8 provides session management, mobility management, and transport services between radio access network 6 and PDN 12 to support access, by wireless device 6, to PDN 12 services. Mobile core network 8 is coupled to PDN 12 via respective communication links and associated interfaces of mobile gateways 10. Mobile core network 8 may comprise, for instance, a general packet radio service (GPRS) core packed-switched network, a GPRS core circuit-switched network, an IP-based mobile multimedia core network, or an Evolved Packet Core (EPC). Mobile core network 8 comprises one or more packet processing nodes to support firewall, load balancing, billing, deep-packet inspection (DPI), and other services for mobile traffic traversing the mobile core network. Mobile gateways 10 operate as gateways to PDN 12 and may each comprise, for example, a Gateway GPRS Serving Node (GGSN), an Access Gateway (aGW), or a Packet Gateway (P-GW). Mobile gateways 10 may each comprise a router that executes routing protocols to identify routes through mobile core network 8 or PDN 12 to various destinations.

Radio access network 6 connects wireless device 6 to mobile core network 8 and provides access control, packet routing and transfer, mobility management, security, radio resource management, and network management. Radio access network 6 may comprise, for example, a GSM Radio Access Network (GRAN), a WiMAX radio access network, a UMTS Radio Access Network (UTRAN), or an evolution of a UTRAN known as an E-UTRAN. Base station 14 may comprise a Node B, an evolved Node B (or "eNodeB"), or wireless access point, for example. Other embodiments of radio access network 6 may include additional base stations, as well as intermediate devices such as radio network controllers (RNCs).

Mobile core network 8, radio access network 6, and wireless device 6 cooperate to establish and operate bearers that, in combination, constitute one or more service bearers to transport mobile traffic, in the form of PDP packet data units (PDUs), between wireless device 6 and PDN 12. In general, a bearer is a set of network resources and data transport functions in mobile service provider network 4 to deliver user traffic between two network entities. A bearer may include a path, a logical connection, or a physical or wireless connection between two network devices. A bearer may comprise, for example, an Evolved Packet System (EPS) bearer. Further details regarding bearer setup and management are found in "3GPP TS 23.401 - General Packet Radio Service (GPRS) enhancements for Evolved Universal Terrestrial Radio Access Network," version 10.0.0, 3rd Generation Partnership Project, Technical Specification Group Services and System Aspects, June 2010, and 3GPP TS 36.300 - Evolved Universal Terrestrial Radio Access (E-UTRA) and Evolved Universal Terrestrial Radio Access Network Evolved Universal Terrestrial Radio Access Network (E-UTRAN) Overall Description," Release 10, 3rd Generation Partnership Project, Technical Specification Group Radio Access Network, 2010, the entire contents of each being incorporated herein by reference. For example, a particular service bearer between wireless device 6 and PDN 12 may be operated according to session data and various protocols executing on wireless device 6, elements of radio access network 6, and elements of mobile core network 8 including one of mobile gateways 10. A service bearer may be composed of multiple sub-bearers connecting individual elements that operate the respective sub-bearers to implement the service bearer.

While described herein with respect to one or more particular architectures for ease of illustration purposes, mobile service provider network 4 may implement any architecture both those set forth by any standards body and those proprietarily owned. Moreover, the techniques may apply to any mobile data protocol supported by these architectures. The techniques therefore should not be limited to cellular architecture referenced herein and the mobile data protocols supported by these architectures. Mobile gateways 10 and other elements of mobile core network 8, as well as base station 14 and other elements of radio access network 6 may, therefore, each represent an abstraction of devices found within any one of the above mobile network architectures.

To initiate establishing a service bearer to access services of PDN 12, wireless device 6 issues session request 16 toward mobile service provider network 4. Session request 16 includes a wireless identity that identifies wireless device 6 to mobile service provider network 4. The wireless identity may represent, for example, an International Mobile Subscriber Identity (IMSI), a Temporary Mobile Subscriber Identity (TMSI), a P-TMSI, a System Architecture Evolution (SAE) TMSI or S-TMSI, an International Mobile Equipment Identity (IMEI), a subscriber username, an MSISDN number (e.g., a "Mobile Subscriber Integrated Services Digital Network Number") or other data identifying wireless device 6.

Radio access network 6 delivers session request 16 to mobile core network 8, which selects mobile gateway 10A to service the session request based on the requested service and delivers the session request to selected mobile gateway 10A. While illustrated in FIG. 1 as a single message from wireless device 6 to mobile gateway 10A, session request 16 may represent a plurality of messages that traverse intermediate network devices of radio access network 6 and mobile core network 8 to facilitate establishing a service bearer between wireless device 6 and mobile gateway 10A. For example, in an LTE architecture, session request 16 may represent an initial *Attach Request* message issued by wireless device 6 to an eNode B represented by base station 14, which forwards the request to an MME of mobile core network 8. The MME may incorporate information received in the *Attach Request* message, including the wireless device identity, into a first Create Session Request message (also represented by session request 16) that the MME then sends to a Serving Gateway (S-GW) mobile core network 8. The S-GW generates a second *Create Session Request* message that incorporates information received by the S-GWin the first *Create Session Request,* such as the wireless device identity. The second *Create Session Request* message, which is sent by the S-GW to mobile gateway 10A operating as a PGW of an EPC of an LTE network, is also represented by session request 16. As another example, session request 16 may represent an *Activate PDP Context Request* message from wireless device 6 to an SGSN of mobile core network 8 and a *Create PDP Context Request* message from the SGSN to mobile gateway 10A operating as a GGSN. Other mobile network architectures may have similar messaging schemes to establish a requested session between wireless device 6 to mobile gateway 10A. In addition, the initial *Attach Request* or *Active PDP Context Request* message may be responsive to a request by one of mobile gateways 10 to wireless device 6 to initiate a session with PDN 12.

In accordance with techniques of this disclosure, mobile gateway 10A redirects the session request embodied in session request 16 to mobile gateway 10B using session request 18. That is, mobile gateway 10A determines mobile gateway 10B is a more appropriate gateway to anchor the requested session based on, for example, administratively configured policies, a current session load upon mobile gateway 10A, a current status of mobile gateway 10A (e.g., maintenance mode) that would adversely affect its ability to service the request session, and/or a current configuration of mobile gateway 10A that prevents the gateway from meeting service, billing, or other requirements for the requested session. In some examples, mobile gateway 10A may not have an interface to PDN 12, thereby necessitating session request redirection to mobile gateway 10B having an interface to PDN 12.

Mobile gateway 10B receives session request 18 and establishes a session and a default service bearer to carry user traffic for wireless device 6. In general, the session is an association between devices of mobile core network 8, including mobile gateway 10B, and wireless device 6 that is identifiable by a combination of a wireless device 6 PDP address and an Access Point Name (APN) for a service provided by PDN 12. An APN identifies a packet data network and may in some instances further identify a requested service (e.g., Internet, WAP, or multimedia messaging service (MMS)) provided by the packet data network. An APN consists of two parts: (1) a network identifier that defines the external network to which the gateway is connected and optionally a service requested by the user, and (2) an operator identifier that defines the specific operator's packet domain network in which the gateway is located. In other words, the APN is a logical name that determines the appropriate gateway (e.g., mobile gateways 10) for the wireless device and may be used by the gateway to determine the services requested by the user or the address of an access point in an external packet network to which user packets from the wireless device should be forwarded. The requested session (hereinafter, "subscriber session" or "session") is therefore a service-specific (as specified by the APN) session for a service provided to wireless device 6 by PDN 12. Besides establishing a default bearer, mobile gateway 10B may establish one or more dedicated bearers between mobile gateway 10A and wireless device 6 to carry user traffic. In an IP-based mobile core network 8, a session comprises an IP-content access network (IP-CAN) session.

In some circumstances, devices of mobile core network 8 or of a remote mobile network to which wireless device 6 is attached while roaming may not be configured with all relevant information regarding capabilities of mobile gateways 10. As a result of the application of these techniques by mobile gateways 10, the gateways themselves make the ultimate determination of the particular one of mobile gateway 10 to establish and anchor a session corresponding to session request 16. Because mobile gateways 10 typically have the most current configuration and status information regarding their present capabilities, the techniques may improve responsiveness and overall session handling by mobile service provider network 4. In addition, enabling administrative configuration of mobile gateway 10A of criteria of session requests and of the status of mobile gateway 10A upon receiving session requests that direct the gateway to offload such session requests provides the mobile service provider network 4 operator with flexibility and control over mobile gateway 10 selection.

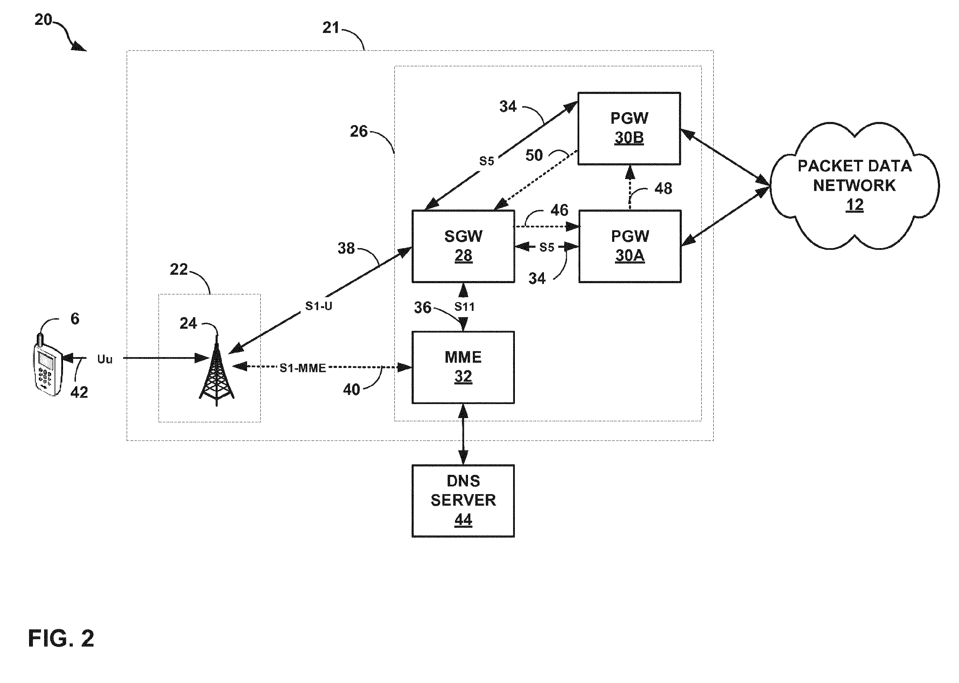

FIG. 2 is a block diagram illustrating an example network system 20 having PDN gateways 30 that, in accordance with techniques described in this disclosure, cooperate to route user sessions between each other for anchoring and management of the sessions. Network system 20 may represent an embodiment of network system 2 of FIG. 1. In this example, network system 20 includes a Long Term Evolution (LTE) mobile service provider network 21 ("LTE network 21") that includes an Evolved Packet Core (EPC) 26 interfaced to an Evolved UTRAN (E-UTRAN) 22. LTE network 21 enables and transports service traffic exchanged between wireless device 6 and PDN 12. EPC 26 and E-UTRAN 22 may represent embodiments of mobile core network 8 and radio access network 6 of FIG. 1, respectively.

EPC 26 provides mobility management, session management, and packet routing and transfer for network system 20. In this example, EPC 26 includes a plurality of PDN Gateways 30A-30B ("PGWs 30") logically connected to Serving Gateway 28 ("SGW 28") via S5 interface 34 operating over one or more communication links. PGWs 30 may represent example instances of mobile gateways 10 of FIG. 1. S5 interface 34 provides protocols to foster user plane tunneling and tunnel management between PGW 30s and SGW 28. S5 interface 34 may comprise a user plane protocol stack that includes GPRS Tunneling Protocol-User Plane (GTP-U) executing over User Datagram Protocol / Internet Protocol (UDP/IP). The term "communication link," as used herein, comprises any form of transport medium, wired or wireless, and can include intermediate nodes such as network devices. SGW 28 hosts mobility anchoring, packet routing and forwarding, lawful interception, and other functionality. PGWs 30 host packet filtering, lawful interception, PDP address allocation, and other functionality.

EPC 26 additionally includes Mobility Management Entity 32 ("MME 32") logically connected to SGW 28 via S11 interface 36 operating over a communication link. S11 interface 36 provides protocols with which MME 32 establishes and manages bearers that traverse or terminate at SGW 28. S11 interface 36 may comprise a control plane protocol stack that includes GTP-Control Plane (GTP-C) executing over UDP/IP. In addition to bearer management and establishment, MME 32 hosts Non-Access Stratum (NAS) signaling, PDN 30 and SGW 28 selection, roaming, and authentication, for instance. In some embodiments, EPC 26 comprises additional MMEs, SGWs, and/or PGWs.

SGW 28 and MME 32 connect to eNode B 24 ("eNB 24") of E-UTRAN 22 via respective aspects of an S1 interface. Specifically, SGW 28 logically connects to eNB 24 via S1-U interface 38 operating over a communication link, and MME 32 logically connects to eNB 24 via S1-MME interface 40 operating over a communication link to establish bearers over S1-U interface 38 between SGW 28 and eNB 24. S1-U interface 38 may comprise a user plane protocol stack that includes GTP-U operating over UDP/IP. S1-MME interface 40 may comprise a control plane protocol stack that includes S1 Application Protocol (S1-AP) transported by Stream Control Transmission Protocol (SCTP) running over IP. ENB 24 serves wireless device 6 via a radio link to eNB 24 operating over a Uu interface 42 and may represent an example instance of base station 14 of FIG. 1.

LTE network 21 establishes a service bearer for wireless device 6 to PDN 12 for transporting service traffic between the wireless devices and the PDN. Each end-to-end service bearer comprises individual sub-bearers that traverse user plane interfaces, which include Uu interface 42, S1-U interface 38, and S5 interface 34. Conventionally, when wireless device 6 requests packet delivery services from LTE network 21 by sending a *NAS Attach Request* message toward eNB 24, eNB 24 notifies MME 32 to cause the MME to select one of PGWs 30. MME 32 may use any PGW selection process, including the PGW selection process described in "3GPP TS 23.401 - General Packet Radio Service (GPRS) enhancements for Evolved Universal Terrestrial Radio Access Network," Section 4.3.8.1, incorporated above. For example, MME 32 may request a PGW network address from Domain Name System (DNS) server 44 for an APN provided by wireless device 6 to MME 32 or a default APN for wireless devices attaching to LTE network 21. DNS server 44 maintains or retrieves from a higher-level DNS server an association between APNs and network addresses of PGWs available to service the associated APNs. DNS server 44 may be local to LTE network 21 or reside in another network. PGWs 30 and PDN 12 communicate using a Gi interface.

In the illustrated example, MME 32 initially selects PGW 30A to anchor the session requested session for the *Attach Request* message from wireless device 6. MME 32 therefore issues a *Create Session Request* message over S11 interface 36 to SGW 28 that includes a number of characteristics of the requested session. The *Create Session Request* includes, for example, a PGW 30A network address, an International Mobile Subscriber Identifier (IMSI) and Mobile Station International Subscriber Directory Number (MSISDN), APN, radio access technology (RAT) type, and charging characteristics, among other characteristics of the requested session. SGW 28 receives the *Create Session Request* from MME 32 and generates and sends *Create Session Request* message 46 to PGW 30A to attempt to establish or reuse an S5 interface 34 bearer between SGW 28 and PGW 30A for the session between wireless device 6 and PDN 12.

Upon receiving *Create Session Request* message 46, PGW 30A applies a set of profiles to provide additional fine grain control over the requested session. In particular, an administrator configures PGW 30A with the profiles that include a set of rules that define matching criteria and actions. Example criteria may be based on the characteristics for the requested session as received in *Create Session Request* message 46, such as IMSI, specified APN, and charging and accounting characteristics. Alternatively or additionally, other example criteria may be based on a state or configuration of PGW 10A, such as session load, resource utilization, current operating mode, APNs serviced, and others. Alternatively or additionally, other example criteria may be based on user characteristics received from an Authentication, Authorization, and Accounting (AAA) server that associates charging and accounting and other user characteristics with a subscriber using wireless device 6 and provides these characteristics to PGW 30A. Example actions that can be defined and executed for matching criteria include redirecting *Create Session Request* message 46 to another PGW identified within the action, applying lawful intercept to the service, or drop or reject the session by sending a *Create Session Response* message to SGW 28 rejecting the session requested *Create Session Request* message 46.

In the illustrated example, PGW 30A applies the profiles to *Create Session Request* message 46 to cause PGW 30A to redirect *Create Session Request* message 46 to PGW 30B as *Create Session Request* message 48. PGW 30A may operate as a proxy for SGW 28 by inserting its network address as an SGW network address within *Create Session Request* message 48 and, if necessary, a TEID for a GTP tunnel between PGWs 30. In this way, PGW 30B may operate as if communicating with SGW 28 and therefore operate according to conventional methods without having to support new functionality. Upon receiving a successful response from the PGW 30B, PGW 30A may output a *Create Session Response* message to SGW 28 directing the SGW to use the PGW 30B for future communications. As a result, later data and control traffic may travel directs between SGW 28 and PGW 30B without being relayed by PGW 30A.

In addition, PGW 30A may maintain a record of *Create Session Request* message 48 to avoid redirecting the request message back to PGW 30B if PGW 30B returns the message in an attempt to re-redirect the request message. PGW 30A may therefore avoid ping-ponging control messages between PGWs 30 due to misconfiguration of profiles on the PGWs.

Wireless device 6, eNB 24, MME 32, SGW 28, and PGW 30B cooperate to establish the individual sub-bearers over the user plane interfaces and to link the sub-bearers to form a service bearer for the requesting wireless device 6. In some instances, PGW 30B allocates, or requests for allocation, a PDP address to wireless device 6. PGW 30B then maps the PDP address to the service bearer established for the requesting wireless device 6, and wireless device 6 and PGW 30B may begin exchanging data traffic over LTE network 21.

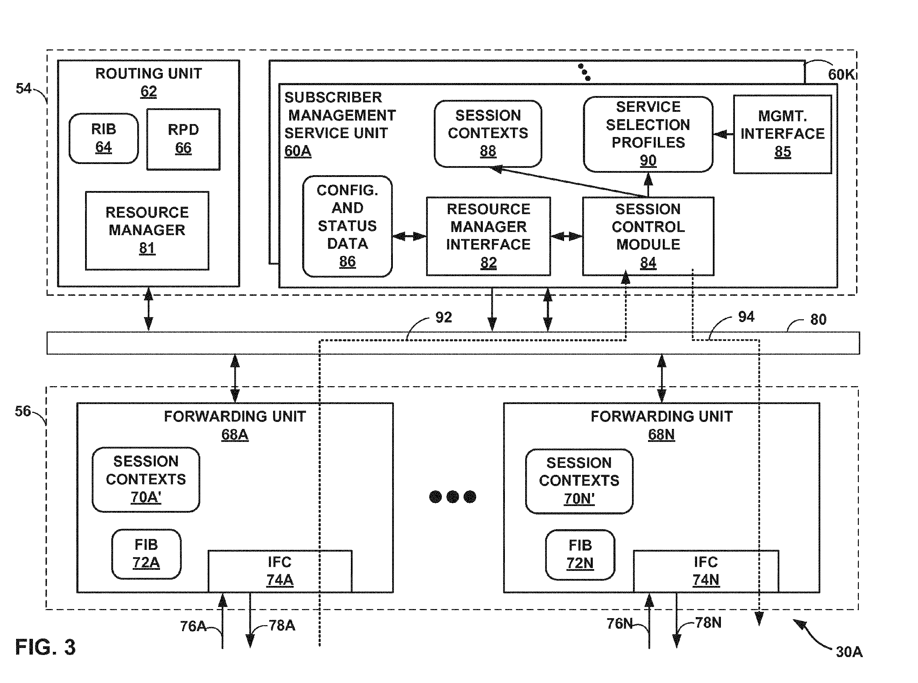

FIG. 3 is a block diagram illustrating, in further detail, an example instance of mobile gateway 10A of FIG. 1 that performs session request redirection according to techniques described herein. In this example, mobile gateway 10A is divided into two logical or physical "planes" to include a first control plane 54 and a second "data" or "forwarding" plane 56. That is, mobile gateway 10A implements two separate functionalities, e.g., the routing/control and forwarding/data functionalities, either logically, e.g., as separate software instances executing on the same set of hardware components, or physically, e.g., as separate physical dedicated hardware components that either statically implement the functionality in hardware or dynamically execute software or a computer program to implement the functionality.

Control plane 54 is a decentralized control plane in that control plane functionality is distributed among routing unit 62 and a plurality of subscriber management service units 60A-60K ("service units 60"). Similarly, data plane 24 in this example is a decentralized data plane in that data plane functionality is distributed among a plurality of forwarding units 68A-68N ("forwarding units 68"). Each of routing unit 62, service units 60, and forwarding units 68 may comprise one or more processors (not shown in FIG. 3) that execute software instructions, such as those used to define a software or computer program, stored to a computer-readable storage medium (again, not shown in FIG. 3), such as non-transitory computer-readable mediums including a storage device (e.g., a disk drive, or an optical drive) or a memory (such as Flash memory, random access memory or RAM) or any other type of volatile or non-volatile memory, that stores instructions to cause the one or more processors to perform the techniques described herein. Alternatively or additionally, each of routing unit 62, service units 60, and forwarding units 68 may comprise dedicated hardware, such as one or more integrated circuits, one or more Application Specific Integrated Circuits (ASICs), one or more Application Specific Special Processors (ASSPs), one or more Field Programmable Gate Arrays (FPGAs), or any combination of one or more of the foregoing examples of dedicated hardware, for performing the techniques described herein. Example details of a mobile gateway device having a plurality of subscriber management service units are described in U.S. Patent Application No. 13/172505, entitled MOBILE GATEWAY HAVING DECENTRALIZED CONTROL PLANE FOR ANCHORING SUBSCRIBER SESSTIONS," filed June 29, 2011, the entire contents being incorporated herein by reference.

Switch 80 couples routing unit 62, service units 60, and forwarding units 68 to deliver data units and control messages among the units. Switch 80 may represent an internal switch fabric or cross-bar, bus, or link. Examples of high-speed multi-stage switch fabrics used as a forwarding plane to relay packets between units within a router are described in U.S. Patent Application 2008/0044181, entitled MULTI-CHASSIS ROUTER WITH MULTIPLEXED OPTICAL INTERCONNECTS. The entire contents of U.S. Patent Application 2008/0044181 are incorporated herein by reference.

Routing unit 62 executes the routing functionality of mobile gateway 10A. In this respect, routing protocol daemon 66 ("RPD 66") of routing unit 62 represents hardware or a combination of hardware and software of control that implements routing protocols (not shown in FIG. 2) by which routing information stored in a routing information base 64 ("RIB 64") may be determined. RIB 64 may include information defining a topology of a network, such as mobile core network 8 of FIG. 1. Routing unit 62 may resolve the topology defined by routing information in RIB 64 to select or determine one or more routes through the network. Routing unit 62 may then update data plane 54 with these routes, where forwarding units 68 of data plane 54 store these routes as respective forwarding information bases 72A-72N ("FIBs 72"). Further details of one example embodiment of mobile gateway 8 can be found in U.S. Patent Application 12/182,619, filed July 30, entitled "STREAMLINED PACKET FORWARDING USING DYNAMIC FILTERS FOR ROUTING AND SECURITY IN A SHARED FORWARDING PLANE," which is incorporated herein by reference.

In addition, routing unit 62 includes resource manager 81 operating as a process or "daemon" to receive static or dynamic resource-related information for mobile gateway 10A and publish the information to service units 60 and forwarding units 68 to facilitate techniques of this disclosure. For example, resource manager 81 may be statically configured, by an administrator or other entity using a management interface, with information describing service units 60 such as the respective capacities of the individual service units (e.g., the number of sessions that the service unit is able to anchor or the particular APNs serviced by service units 60). As described in further detail below, resource manager 28 may also receive resource-related information from service units 60 that describes respective dynamic session loads being currently anchored by the service units.

Data plane (alternatively, "forwarding plane") 56 represents hardware or a combination of hardware and software that forward network traffic in accordance with forwarding information. In the example of mobile gateway 10A of FIG. 2, data plane 56 includes forwarding units 68 that provide high-speed forwarding of network traffic received by interface cards 74A-74N ("IFCs 74") via inbound links 76A-76N to outbound links 78A-78N. Forwarding units 68 may each comprise one or more packet forwarding engine ("PFE") coupled to respective interface cards 74 and may represent, for example, a dense port concentrator (DPC), modular port concentrator (MPC), flexible physical interface card (PIC) concentrator (FPC), or another line card, for example, that is insertable within a mobile gateway 10A chassis or combination of chassis.

Each of forwarding units 68 includes substantially similar components to perform substantially similar functionality, said components and functionality being described hereinafter with respect to forwarding unit 68A. IFC card 44A of forwarding unit 68A receives session request 92 on inbound interface 46A and forwarding unit 68A forwards the session request to service unit 60A. Session request 92 may represent an example of session request 16 of FIG. 1 and may include, for instance, *Create PDP Context Request* transmitted by an SGSN to mobile gateway 10A operating as a GGSN of a GPRS packet-switched network. Session request 92 may also represent an example instance of *Create Session Request* 46 of FIG. 2. Session request 92 includes a wireless device identifier (e.g., an IMSI) and may further include an Access Point Name that identifies a packet data network and may in some instances further identify a requested service (e.g., Internet, WAP, or multimedia messaging service (MMS)) provided by the packet data network.

Each of forwarding unit 68 may includes a request delegation module that receives session requests via IFC cards and delegates the session requests to a selected one of subscriber management service units 60 according to an association between the respective wireless identifiers or another property of the session requests and the selected service unit for the session request. The association may be a result of a hash or other function performed on session request field values by request delegation module. Because each of forwarding units may delegate session requests in this manner, the techniques may enable the mobile gateway to avoid centralized delegating within routing unit or a single one of subscriber management service units. This may prevent a bottleneck in session request handling inherent to centralized delegation and allow mobile gateway to respond more quickly to session requests, thereby increasing the ability of the mobile gateway to manage sessions in the highly fluid environment of mobile connectivity. Moreover, this may allow the mobile gateway to more easily be expanded to include computing resources necessary to handle increased volume of subscriber sessions.

Subscriber management service units 60 of control plane 54 may present a uniform interface to the mobile core network and provide decentralized service session setup and management for mobile gateway 10A. In the illustrated example, each of service units 60 provides all functionality for establishing and maintaining subscriber sessions, including executing various control protocols in addition to GTP to obtain subscriber-specific information for a session. For example, session setup module 84 may execute an authentication, authorization, and accounting (AAA) protocol, a dynamic host configuration protocol (DHCP), and a charging protocol for communication, for example, with a policy charging rules function (PCRF) entity. As a result, each of subscriber management service units 60 may independently operate to execute control protocols and establish sessions.

Moreover, all of service units 60 may be addressable by the same IP or other PDP address, and control messages destined for the same IP or other PDP address of service units 60 may therefore in these instances be handled by any of the service units. Internally, each of service units 60 includes a unique identifier that identifies the service unit to other components of mobile gateway 10A. Service units 60 identifiers may include, for example, an index, identifying string, internal IP address, or link layer address. Service units 60 may each represent, for example, a packet forwarding engine (PFE) or a component of physical interface card insertable within a chassis of mobile gateway 10A. The physical interface card may be, for instance, a multi-services dense port concentrator (MS-DPC). Service units 60 may also each represent a co-processor executing on a routing node, such as routing unit 62. Service units 60 may be alternatively referred to as "service PICs" or "service cards." Each of service units 60 includes substantially similar components to perform substantially similar functionality, said components and functionality being described hereinafter with respect to service unit 60A.

Session control module 84 of service unit 60A establishes sessions requested by a wireless device via the mobile core network in which mobile gateway 10A is located and manages the sessions once established. Session control module 84 stores session data, received in control plane messages or generated/allocated by session control module 84, for one or more sessions managed by service unit 60A in session contexts 88. Service unit 60A may be referred to as the anchoring service unit for sessions stored in session contexts 88 in that service unit 60A stores control and forwarding information needed to manage the sessions. A session context stored in session contexts 88 for a session in which a wireless device participates may include, for example, the PDP address allocated for the wireless device for use in sending and receiving user packets, routing information used by service unit 60A in forwarding user packets such as tunnel endpoint identifiers (TEIDs) and identifiers/addresses for downstream nodes, the APN for the session, and quality of service (QoS) profiles.

As control plane anchors for subscriber sessions, service units 60 handle configuration of forwarding units 68 for constructing subscriber-specific forwarding paths for mobile subscribers. For example, service unit 60A may program session contexts 88 into forwarding units 68 for storage in a respective one of session contexts 88'. Forwarding unit 68A, for instance, receives user packets, maps the user packets to a session context in session contexts 88A', and apply forwarding constructs to the user packets according to the session context data. For example, forwarding of downstream user packets by forwarding unit 68A for a particular session may include encapsulating the user packets using the GPRS Tunneling Protocol (GTP) and setting the specified downstream TEID for the session within a GTP header. Example details on subscriber management units 60 constructing subscriber-specific forwarding paths within forwarding units 68 can be found in U.S. Patent Application No. 13/172,505, entitled "VARIABLE-BASED FORWARDING PATH CONSTRUCTION FOR PACKET PROCESSING WITHIN A NETWORK DEVICE," filed June 29, 2011, the entire contents being incorporated herein by reference.

Management interface 85 (illustrated as "mgmt. interface 85") presents a visual or other interface by which a mobile network operator may manage service unit 60A. In particular an operator or other entity may use management interface 85 to configure service selection profiles 90 that facilitate techniques described in this disclosure. Management interface 85 may in some instances be centralized within routing unit 62 or another unit of mobile gateway 10A. Management interface 85 may present a graphical user interface (GUI), a command line interface, or a control protocol interface. For human-cognizable presentation, management interface 85 may be coupled to a computer monitor, a television, a projector, speakers, or other audio and video output devices (not shown). To receive user input, management interface 85 may be coupled to a keyboard, a mouse, or other peripherals.

Each of service selection profiles 90 is associated with one or more APNs and defines, for any associated APNs, conditions and actions to provide flexible routing of session requests to an operator-preferred gateway of the mobile network in which mobile gateway 10A resides. One of service selection profiles 90 may be a default service selection profile for APNs not associated with any other service selection profiles 90. In some instances, mobile gateway 10A operates in a conventional manner with respect to session requests that specify an APN not associated with any of service selection profiles 90. Actions specified by service selection profiles 90 may include forwarding a matching session request to another gateway of the mobile core network or to another one of service units 10. Where session control module 84 redirects to another one of service units 10, the other service unit is in effect operating as a separate gateway to the packet data network. Service unit data 86 stores configuration and status information for service unit 60A and mobile gateway 10A generally. Resource manager 81, management interface 85, and session control module 84 of routing unit 62 may store status information to service unit data 86.

Session control module 84 receives session request 92 via switch 80 and applies the one of service selection profiles 90 that is associated with the APN specified by session request 92. That is, session control module 84 reviews conditions specified by the rules of the associate one or more service selection profiles 90 to determine whether the conditions match a state of service unit 60 or mobile gateway 10A as stored in service unit data 86, characteristics of the requested session as specified by session request 92, or characteristics of the subscriber identified by session request 92. For matching conditions, session control module 84 executes the corresponding actions specified by the profiles 90. In the example instance, session control module 84 forwards session request 92 via forwarding unit 68N to another gateway of the mobile core network as session request 94. Session control module 84 may modify the session request as described above to, for example, cause service unit 60A to operate as a proxy for the SGW that send session request 92.

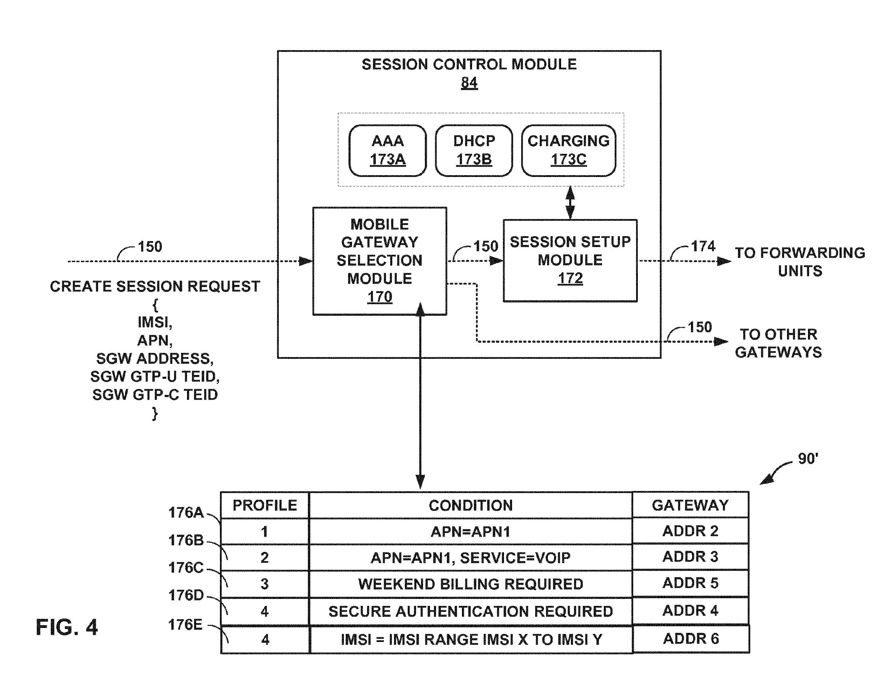

FIG. 4 is a block diagram illustrating example components of service unit 60A that operate to apply service selection profiles and potentially redirect subscriber sessions to other mobile gateway devices to serve as control plane anchors for the sessions. Service selection profiles 90' of service unit 10A include example profiles 176A-176E that each map a set of conditions to an identifier for mobile network gateways. For example, profile 176A maps APN1 to mobile gateway having network address ADDR 2 and profile 176B maps APNS specifying APN1 and service of "VoIP" to a different mobile network gateway identified by network address ADDR 3. Example profile 176C maps subscriber sessions having specific charging and accounting requirements (e.g., weekend billing requirements) to a particular gateway, i.e., mobile gateway device having network address ADDR 5. Example profile 176D maps subscribers with specific authentication requirements to mobile gateway having address ADDR 4 as this mobile gateway, in this example, may have specific AAA functions within its anchoring control plane subscriber units. Example profile 176E maps subscribers having an IMSI within a particular range to mobile gateway having address ADDR 6. In this way, subscriber management service units 10 implementing a decentralized control plane and provide fine grain control and redirection of subscriber management functions to other mobile gateway devices.

Mobile gateway selection module 170 of session control module 84 receives session request 150 forwarded by forwarding units 68. Session request 150 may be a *Create Session Request* message for an LTE network and includes IMSI, APN, S-GW address, S-GW GTP-U TEID, and S-GW GTP-C values. Mobile gateway selection module 170 accesses profiles 90' potentially using an IMSI and APN of session request 50 as well as information from subscriber records associated with the subscriber to identify any matching entries 176 and ultimately select a mobile gateway for serving as an anchor for the requested subscriber session. In the event multiple profiles match, mobile gateway selection module 170 may apply a prioritization scheme or a load balancing to select from the acceptable mobile gateways.

Session setup module 172 is a stateful session protocol module that exchanges control messages with downstream nodes of the content access network and with network servers to establish non-redirected sessions, i.e., sessions being managed by service unit 10A in this example. In the illustrated example, session setup module 172 executes various control protocols 173A-73C in addition to GTP to obtain subscriber-specific information for a session. In particular, session setup module 172 executes an authentication, authorization, and accounting (AAA) protocol 173A, a dynamic host configuration protocol (DHCP) 173B, and a charging protocol 173C for communication, for example, with a policy charging rules function (PCRF) entity. As a result, each of subscriber management service units 10 may independently operate to execute control protocols 173 and establish sessions. Session setup module 172 may receive session request 150 and exchange control messages with downstream nodes of the content access network to establish the requested session and store resulting information for the session in session contexts 88.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a non-transitory computer-readable medium or computer-readable storage medium, containing instructions. Instructions embedded or encoded in a computer-readable medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer-readable storage media. It should be understood that the term "computer-readable storage media" refers to physical storage media, and not signals or carrier waves, although the term "computer-readable media" may include transient media such as signals, in addition to physical storage media.

In addition to or as an alternative to the above, the following embodiments are described. The features described in any of the following embodiments may be utilized with any of the other embodiments described herein.

One embodiment is directed to a method comprising receiving a session request with a first gateway of a mobile service provider network that provides access to services of one or more packet data networks, wherein the session request identifies a mobile device and requests the first gateway to serve as an anchor for a communication session for the mobile device when accessing the packet data network; and redirecting the session request from the first gateway to a second gateway of the mobile service provider network.

In some embodiments, the method may further comprise applying a service selection profile to the session request with the first gateway, wherein the service selection profile specifies a condition and a corresponding action for execution upon satisfaction of the condition that directs the first gateway to redirect session requests to the second gateway.

In some embodiments, the method may further comprise configuring the gateway with a plurality of service selection profiles; associating each of the service selection profiles with an access point name (APN) that identifies one of the packet data networks; upon receiving a session request with a first gateway, selecting one of the service selection profiles in accordance with an APN specified by the session request; and applying the selected service selection profile to the session request to map an APN specified with the session request to the second gateway and redirect the session request to the second gateway.

In some embodiments, the method may further comprise wherein the service selection profile specifies subscriber charging and accounting features provided by a plurality of subscriber management units of the gateway, and wherein applying the service selection profile comprises comparing the charging and accounting features provided by the subscriber management units with a particular charging and accounting service required for the requested session, and redirecting the session request to the second gateway when the particular charging and accounting service required for the requested session is not supported by the plurality of subscriber management units.

In some embodiments, the method may further comprise wherein the gateway comprises a plurality of service units, wherein a first one of the service units receives the session request, wherein the second gateway is a second one of the service units, and wherein the second one of the service units establishes the request session.

In some embodiments, the method may further comprise redirecting the session request from the first gateway to a second gateway of the mobile service provider network when the first gateway is unable to service an access point name specified in the session request.

In some embodiments, the method may further comprise redirecting the session request from the first gateway to a second gateway of the mobile service provider network based at least on a session load of the first gateway.

In some embodiments, the method may further comprise redirecting the session request from the first gateway to a second gateway of the mobile service provider network based at least on a wireless identity specified by the session request.

In some embodiments, the method may further comprise receiving the session request from a serving node; modifying the session request to specify the first gateway as a proxy serving node for the requested session; receiving a response to the session request with the first gateway from the second gateway; and forwarding the response to the serving node.

Some embodiments are directed to a computer-readable storage medium encoded with instructions for causing one or more programmable processors to perform any of the methods set forth above. Some embodiments are directed to a device comprising means for performing any of the methods set forth above.

Some embodiments are directed to a mobile network gateway comprises a data plane having a plurality of forwarding components to receive session requests from a mobile service provider network in which the mobile network gateway resides; and a control plane comprising one or more subscriber management service units that serve as anchors for communication session for mobile devices when accessing one or more packet data network by the mobile service provider network; and a session control module of the control plane to redirect at least one of the session requests from the mobile network gateway to another mobile network gateway of the mobile service provider network.

In some embodiments, the mobile network gateway further comprises a service selection profile that specifies a condition and a corresponding action for execution upon satisfaction of the condition; and a session control module of the control plane that applies the service selection profile to the session request to redirect the session request to the other mobile network gateway based at least on the corresponding action.

In some embodiments, the service selection profile of the mobile network gateway is one of a plurality of service selection profiles, each of the service selection profiles with an access point name (APN) that identifies a packet data network, and the session control module selects one of the service selection profiles in accordance with an APN specified by the session request.

In some embodiments, the control plane of the mobile network gateway is a decentralized control plane including a plurality of subscriber management service units, a first one of the subscriber management service units receives the session request, the other mobile network gateway is a second one of the service units, and the second one of the service units establishes the request session.

In some embodiments, the control plane of the mobile network gateway redirects the session request to the other mobile network gateway when the mobile network gateway is unable to service an access point name (APN) specified in the session request.

In some embodiments, the control plane of the mobile network gateway redirects the session request to the other mobile network gateway based at least on a session load of the mobile network gateway.

In some embodiments, the control plane of the mobile network gateway redirects the session request to the other mobile network gateway based at least on a wireless identity specified by the session request.

In some embodiments, the data plane of the mobile network gateway receives the session requests from a serving node of the mobile service provider network, the session control module modifies the redirected session requests to specify the mobile network gateway as a proxy serving node for the requested sessions in which the forwarding plane receives responses to the redirected session requests, and the control plane forwards the response back to the serving node.

Some embodiments are directed to a non-transitory computer-readable storage medium comprises instructions for causing one or more programmable processors to receive a session request with a first gateway of a mobile service provider network that provides access to services of a packet data network; and redirect the session request from the first gateway to a second gateway of the mobile service provider network.

Moreover, any of the specific features set forth in any of the embodiments described above may be combined into a beneficial embodiment of the described techniques. That is, any of the specific features are generally applicable to all embodiments of the invention. Various embodiments of the invention have been described.

## Claims

1. A method comprising:
receiving a session request with a first gateway of a mobile service provider network that provides access to services of one or more packet data networks, wherein the session request identifies a mobile device and requests the first gateway to serve as an anchor for a communication session for the mobile device when accessing the packet data network; and
redirecting the session request from the first gateway to a second gateway of the mobile service provider network.

2. The method of claim 1, further comprising:
applying a service selection profile to the session request with the first gateway, wherein the service selection profile specifies a condition and a corresponding action for execution upon satisfaction of the condition that directs the first gateway to redirect session requests to the second gateway.

3. The method of claim 2, further comprising:
configuring the gateway with a plurality of service selection profiles;
associating each of the service selection profiles with an access point name (APN) that identifies one of the packet data networks;
upon receiving a session request with a first gateway, selecting one of the service selection profiles in accordance with an APN specified by the session request; and.
applying the selected service selection profile to the session request to map an APN specified with the session request to the second gateway and redirect the session request to the second gateway.

4. The method of any of claims 2-3,
wherein the service selection profile specifies subscriber charging and accounting features provided by a plurality of subscriber management units of the gateway, and
wherein applying the service selection profile comprises comparing the charging and accounting features provided by the subscriber management units with a particular charging and accounting service required for the requested session, and redirecting the session request to the second gateway when the particular charging and accounting service required for the requested session is not supported by the plurality of subscriber management units.

5. The method of any of claims 1-4,
wherein the gateway comprises a plurality of service units,
wherein a first one of the service units receives the session request,
wherein the second gateway is a second one of the service units, and
wherein the second one of the service units establishes the request session.

6. The method of any of claims 1-5, further comprising:
redirecting the session request from the first gateway to a second gateway of the mobile service provider network when the first gateway is unable to service an access point name specified in the session request.

7. The method of any of claims 1-6, further comprising:
redirecting the session request from the first gateway to a second gateway of the mobile service provider network based at least on a session load of the first gateway.

8. The method of any of claims 1-7, further comprising:
redirecting the session request from the first gateway to a second gateway of the mobile service provider network based at least on a wireless identity specified by the session request.

9. The method of any of claims 1-8, further comprising:
receiving the session request from a serving node;
modifying the session request to specify the first gateway as a proxy serving node for the requested session;
receiving a response to the session request with the first gateway from the second gateway; and
forwarding the response to the serving node.

10. A device comprising
a first gateway of a mobile service provider network that provides access to services of one or more packet data networks operable to receive a session request, wherein the session request identifies a mobile device and requests the first gateway to serve as an anchor for a communication session for the mobile device when accessing the packet data network; and
wherein the first gateway is operable to redirect the session request from the first gateway to a second gateway of the mobile service provider network.

11. The device of claim 10, comprising means configured to perform the method of any of claims 1 to 9.

12. A computer program product comprising instructions for causing one or more programmable processors to perform the method recited by any of claims 1-9 or to become the device of claim 10 or 11.
